Europäisches Patentamt

European Patent Office

Office européen des brevets

(19)

(11) Veröffentlichungsnummer: **0 263 460**
**A2**

(12) **EUROPÄISCHE PATENTANMELDUNG**

(21) Anmeldenummer: 87114499.4

(22) Anmeldetag: 05.10.87

(51) Int. Cl.⁴ **C08J 3/22** , C09B 67/20 , C08L 77/08

(30) Priorität: 08.10.86 DE 3634280

(43) Veröffentlichungstag der Anmeldung:
**13.04.88 Patentblatt 88/15**

(84) Benannte Vertragsstaaten:
**BE DE FR GB IT NL**

(71) Anmelder: **BASF Lacke + Farben**
**Aktiengesellschaft**
**Max-Winkelmann-Strasse 80**
**D-4400 Münster(DE)**

(72) Erfinder: **Günther, Hans**
**Osterbronnstrasse 56 a**
**D-7000 Stuttgart 80(DE)**
Erfinder: **Lüdtke, Rose**
**Rotenwaldstrasse 41 a**
**D-7000 Stuttgart 1(DE)**
Erfinder: **Müller, Fritz**
**Moerikestrasse 10**
**D-7121 Walheim(DE)**
Erfinder: **Kaul, Iris**
**Florian-Geyer-Strasse 20**
**D-7000 Stuttgart(DE)**

(74) Vertreter: **Mutzbauer, Helmut, Dr. et al**
**BASF Aktiengesellschaft Carl-Bosch-Strasse**
**38**
**D-6700 Ludwigshafen(DE)**

(54) **Hochkonzentrierte Färbemittelpräparationen, ein Verfahren zu ihrer Herstellung und ihre Verwendung zur Einfärbung von thermoplastischen Kunststoffen.**

(57) Färbemittelpräparationen, enthaltend 50 bis 75 Gew.% eines Färbemittels, ein Dispergierhilfsmittel sowie als Trägermaterial ein thermoplastisches Polyamidharz auf Basis von Kondensationsprodukten von dimerisierten ungesättigten Fettsäuren und aliphatischen Diaminen, ein Verfahren zu ihrer Herstellung sowie ihre Verwendung zur Einfärbung von thermoplastischen Kunststoffen.

EP 0 263 460 A2

## Hochkonzentrierte Färbemittelpräparationen, ein Verfahren zu ihrer Herstellung und ihre Verwendung zur Einfärbung von thermoplastischen Kunststoffen

Die vorliegende Erfindung betrifft neue hochkonzentrierte Färbemittelpräparationen, enthaltend ein Färbemittel, ein Dispergierhilfsmittel sowie als Trägermaterials ein thermoplastisches Polyamidharz auf Basis von Kondensationsprodukten von dimerisierten ungesättigten Fettsäuren und aliphatischen Diaminen, ein Verfahren zu ihrer Herstellung sowie ihre Verwendung zur Einfärbung von thermoplastischen Kunststoffen, insbesondere von Polyamidfasern.

Die Einfärbung von Polyamidfasern erfolgt überwiegend durch Spinnfärbung. Dabei wird das noch ungefärbte Polyamid im Spinnextruder in der Masse gefärbt und zu Fasern verarbeitet. Diese Art der Einfärbung läßt sich nur anwenden, wenn das jeweilige Färbemittel in einer sehr guten Feinverteilung vorliegt. Ungenügende Feinverteilung des Färbemittels führt nämlich zur Verminderung der mechanischen Festigkeit. In manchen Fällen kann sogar ein Faserabriß erfolgen. Aus diesem Grunde wird die Spinnfärbung üblicherweise mittels spezieller Färbemittelpräparationen durchgeführt.

Die für diese Anwendung handelsüblichen Färbemittelpräparationen enthalten in der Regel Polyamid als Trägermaterial sowie ein Färbemittel. Der Anteil an Färbemittel beträgt dabei bei anorganischen Pigmenten bis zu 40 Gew.%, bei organischen Pigmenten und löslichen Farbstoffen bis zu 25 Gew.%, jeweils bezogen auf die Färbemittelpräparation.

Aufgabe der vorliegenden Erfindung was es, Färbemittelpräparationen bereitzustellen, die einen wesentlich höheren Färbemittelanteil aufweisen, wobei die Dispersionsgüte (Feinverteilung) erhalten bleiben und die mechanischen Werte der damit eingefärbten Faser nicht beeinträchtigt werden sollten.

Es wurden neue Färbemittelpräparationen, enthaltend - bezogen auf die Präparation - 50 bis 75 Gew.% eines Färbemittels, ein Dispergierhilfsmittel sowie als Trägermaterial ein thermoplastisches Polyamidharz auf Basis von Kondensationsprodukten von dimerisierten ungesättigten Fettsäuren und aliphatischen Diaminen, wobei das Polyamidharz ein Molekulargewicht von 3000 bis 6000 und eine Schmelzviskosität von 0,5 bis 3,0 Pa.s (bei 165°C) aufweist, gefunden.

Das als Trägermaterial dienende thermoplastische Polyamidharz ist ein Kondensationsprodukt von dimerisierten ungesättigten Fettsäuren und aliphatischen Diaminen. Die Dimerisierungs-und Kondensationsreaktionen, die zu den thermoplastischen Polyamidharzen führen, sind an sich bekannt und beispielsweise in Ullmann, Enzyklopädie der Technischen Chemie, 4. Auflage, Band 11, Seite 540 sowie Band 12, Seite 552, beschrieben.

Als ungesättigte Fettsäuren, die sowohl einfach wie auch mehrfach ungesättigt sein können, kommen hauptsächlich $C_{18}$-$C_{22}$-Fettsäuren, z.B. Palmitoleinsäure, Petroselinsäure, Petroselaidinsäure, Ölsäure. Elaidinsäure, Linolsäure, Linolaidinsäure, Linolensäure, α-Eläostearinsäure, β-Eläostearinsäure, Gadoleinsäure, Arachidonsäure oder Mischungen dieser Säuren in Betracht.

Besonders bevorzugt sind Präparationen mit Polyamidharzen, die sich von Dimeren der Ölsäure, Linolsäure, Linolensäure oder Mischungen dieser Säuren ableiten. Insbesondere sind Präparationen zu nennen, die Polyamidharze enthalten, die sich von dimerisierter Tallöl-Fettsäure ableiten. Tallöl-Fettsäure enthält überwiegend Ölsäure und Linolsäure.

Als aliphatische Diamine kommen Diamine in Betracht, die eine geradkettige oder verzweigte $C_2$-$C_6$-Alkylenkette aufweisen, z.B. Ethylendiamin, 1,2-Propylendiamin, 1,3-Propylendiamin, 1,4-Butylendiamin, 1,5-Pentylendiamin oder 1,6-Hexylendiamin.

Insbesondere sind Präparationen bevorzugt, die solche Polyamidharze enthalten, die sich von Ethylendiamin ableiten.

Das in den erfindungsgemäßen Färbemittelpräparationen enthaltene thermoplastische Polyamidharz weist ein Molekulargewicht von 3000 bis 6000, vorzugsweise 4000 bis 5000 und insbesondere ca. 5000 sowie eine Schmelzviskosität von 0,5 bis 3,0 Pa.s, vorzugsweise 2,1 bis 2,7 Pa.s (jeweils bei 165°C) auf. Der Erweichungspunkt dieser Harze liegt bei ca. 90 bis 120°C, vorzugsweise ca. 105 bis 115°C.

Als Färbemittel eignen sich anorganische Pigmente, organische Pigmente und lösliche Farbstoffe.

Beispielsweise sind folgende anorganische Pigmente zu nennen: Eisenoxidrot in deckender, halbtransparenter oder hochtransparenter Form (z.B. C.I. Pigment Rot 101; C.I.Nr. 77 491), Cadmiumpigmente (z.B. C.I. Pigment Gelb 37; C.I.Nr. 77 199 oder C.I. Pigment Rot 108; C.I.Nr. 77 202) oder Mischphasenpigmente des Titandioxids (z.B. C.I. Pigment Gelb 118; C.I.Nr. 77 894).

Als organische Pigmente seien z.B. Derivate der Naphthalin-oder Perylentetracarbonsäure, Anthrachinonpigmente, Dioxazine und Phthalocyaninpigmente genannt.

Lösliche Farbstoffe sind z.B. C.I. Solvent Gelb 21; C.I.Nr. 18 690, C.I. Solvent Rot 7 oder C.I. Solvent Rot 225.

Die Wahl des Dispergierhilfsmittels ist vom Färbemittel abhängig.

Verwendet man anorganische oder organische Pigmente als Färbemittel, so dient als Dispergierhilfsmittel in den erfindungsgemäßen Präparationen ein Produkt auf Basis von Vollestern von Polyalkoholen mit polyfunktionellen Säuren. Geeignete Polyalkohole sind z.B. Propan-1,3-diol, Butan-1,3-diol, Butan-1,4-diol oder Pentaerythrit. Als polyfunktionelle Säuren kommen beispielsweise Adipinsäure oder Phthalsäure in Betracht. Das Molekulargewicht der Dispergierhilfsmittel kann im Hinblick auf ihre wechselnde Zusammensetzung selbstverständlich schwanken; jedoch werden im allgemeinen bei Verwendung von Dispergiermitteln mit einem Molekulargewicht von 1000 bis 2000 gute Ergebnisse erreicht.

Bevorzugt sind Dispergierhilfsmittel auf Basis von Adipinsäure, die ein Molekulargewicht von 1000 bis 2000, vorzugsweise von 1300 bis 1500 und insbesondere von ca. 1500 und eine Viskosität von 5000 bis 8000 mPa.s (gemessen bei 25°C) aufweisen. Als Alkoholkomponente dient vorzugsweise Butan-1,3-diol.

Verwendet man lösliche Farbstoffe als Färbemittel, so dient als Dispergierhilfsmittel in den erfindungsgemäßen Präparationen Magnesium-, Calcium-oder Zinkstearat. Vorzugsweise wird Zinkstearat eingesetzt.

Im Falle der anorganischen oder organischen Pigmente enthalten die erfindungsgemäßen Färbemittelpräparationen thermoplatisches Polyamidharz und Dispergiermittel auf Basis von Vollestern von Polyalkoholen mit polyfunktionellen Säuren vorzugsweise im Gewichtsverhältnis 4:1 bis 5:1.

Im Falle der löslichen Farbstoffe enthalten die erfindungsgemäßen Färbemittelpräparationen thermoplastisches Polyamidharz und Magnesium-, Calcium-oder Zinkstearat vorzugsweise im Gewichtsverhältnis 7:1 bis 9:1.

Die erfindungsgemäßen hochkonzentrierten Färbemittelpräparationen werden vorteilhaft erhalten, wenn man Trägermaterial und Dispergierhilfsmittel bei 140 bis 160°C aufschmilzt, anschließend das Färbemittel zugibt und bei einer Temperatur von 100 bis 140°C dispergiert.

In einer bevorzugten Ausführungsform wird ein Teil des Färbmittels, in der Regel 30 bis 40 Gew.% des in der fertigen Zubereitung enthaltenen Färbemittels bereits zusammen mit dem Trägermaterial und dem Dispergierhilfsmittel vorgelegt. Nach dem Aufschmelzen wird dann die restliche Färbemittelmenge gegeben, woran sich die Dispergierung anschließt, die nach ca. 1 bis 3 Stunden beendet ist. Hierdurch erreicht man die hohe und besonders rasche Färbemittelaufnahme der Schmelze und besitzt gleichzeitig die Möglichkeit, die Präparation in den Erweichungsbereich von ca. 100 bis 120°C zu bringen.

Zweckmäßig führt man den Aufschmelzvorgang und den Dispergierschritt in einer beheizbaren Apparatur, z.B. in einem beheizbaren Kneter durch. Die Dispergierung kann sowohl kontinuierlich als auch diskontinuierlich durchgeführt werden.

Nach erfolgter Dispergierung kann die hochkonzentrierte Präparation anschließend durch Schneckenaustrag und Wassergranulierung in Granulatform oder durch Mahlen in Pulverform übergeführt werden.

Die neuen Färbemittelpräparationen besitzen einen hohen Färbemittelanteil (50 bis 75 Gew.%), wobei das Färbemittel auch in dieser hohen Konzentration ausgezeichnet dispergiert ist. Bei der Einfärbung von Polyamid mittels der erfindungsgemäßen Präparationen werden die mechanischen Werte der Faser nicht negativ beeinflußt.

Der Erfolg der Anwendung der oben genannten thermoplastischen Polyamidharze als Trägermaterial war nicht vorauszusehen, da diese Harze üblicherweise Bindemittel darstellen, die im Druck-und Lackbereich verwendet werden.

Die erfindungsgemäßen Färbemittelpräparationen können in vorteilhafter Weise zur Einfärbung von thermoplastischen Kunststoffen verwendet werden. Geeignete thermoplastische Kunststoffe sind z.B. Polyamid, Polystyrol, ABS-Polymerisate, Styrol-Butadien-Blockpolymerisate, Polyoxymethylen, Polyurethan oder Polycarbonat. Insbesondere eignen sich die neuen Präparationen vorteilhaft zur Einfärbung von Polyamid, wobei die Einfärbung von Polyamidfasern besonders hervorzuheben ist.

Die folgenden Beispiele sollen die Erfindung näher erläutern. Bei den in den Beispielen genannten Teilen handelt es sich um Gewichtsteile.

Beispiel 1

20 Teile eines thermoplastischen Polyamidharzes auf der Basis eines Kondensationsproduktes von dimerisierter Tallöl-Fettsäure und Ethylendiamin (Molekulargewicht ca. 5000; Erweichungspunkt 105 bis 115°C; Schmelzviskosität (bei 165°C) 2,1 bis 2,7 Pa.s), 5 Teile Zinkstearat (Schmelzpunkt 118 bis 122°C) wurden zusammen mit 30 Teilen C.I. Solvent Gelb 21; C.I.Nr. 18 690 in einem auf 160°C beheizten Kneter vorgelegt und aufgeschmolzen.

Nachdem eine homogene Schmelze erreicht war, wurden weitere 45 Teile Solvent Gelb 21 zugegeben und die Mischung bei einer Massetemperatur von 100°C dispergiert.

3

Nach einer Stunde war die optimale Dispergierqualität erreicht. Der Färbemittelgehalt der Präparation betrug 75 Gew.%.

Mit der fertigen Präparation wurde mittels eines Meßextruders der Druckfilterwert bestimmt. Der Druckfilterwert (DF-Wert) wird bei der Massefärbung von Polyamid bestimmt. Dabei werden Färbemittelagglomerate aus der Schmelze herausgefiltert und die Druckzunahme an einem eingebauten Filter während einer genau definierten Laufzeit gemessen. Der DF-Wert wird aus dem Massestrom. dem Färbemittelanteil, der Fläche des Filters, der Druckdifferenz und der Dauer der Messung nach folgender Formel berechnet:

$$\text{Färbemittelanteil (in Gew.\%)} \times \frac{\Delta P \times F}{Q \times t} = \Delta N/g \quad (\text{DF-Wert})$$

$\Delta P$ = Druckdifferenz (PEnd - PAnfang)

F = offene Filterfläche [cm²]

Q = Massestrom [g/min]

t = Laufzeit der Messung [min]

Je kleiner der DF-Wert, desto besser die Dispersionsgüte. Erfahrungsgemäß sollte der auf diese Weise berechnete DF-Wert < 3 Δ N/g sein.) Im Falle der vorliegenden Zubereitung wurde ein DF-Wert von 0,3 Δ N/g ermittelt, der auch durch Verdünnen der Präparation mit handelsüblichem Polyamid 6 auf einen Färbemittelgehalt von 25 Gew.% nur unwesentlich auf 0.26 Δ N/g verbessert werden konnte. Handelsübliche Präparationen mit einem Gehalt an C.I. Solvent Gelb 21 von 25 Gew.% haben ebenfalls DF-Werte von 0,2 bis 0,3 Δ N/g.

Beispiel 2

35 Teile des in Beispiel 1 beschriebenen Polyamidharzes, 5 Teile eines Dispergierhilfsmittels auf Basis von Adipinsäure und Butan-1,3-diol mit einem Molekulargewicht von ca. 1500 und 20 Teile C.I. Pigment Blau 15:3; C.I.Nr. 74 160, wurden in einem auf 160°C beheizten Kneter vorgelegt und aufgeschmolzen.

Nachdem eine homogene Schmelze erreicht war, wurden weitere 40 Teile des Pigments portionsweise zugegeben und die Mischung bei einer Massetemperatur von 110°C dispergiert.

Nach 2 Stunden war die optimale Dispergierqualität erreicht. Durch anschließenden Schneckenaustrag und Wassergranulierung erhielt man eine staubfreie, rieselfähige Präparation mit einem Pigmentgehalt von 60 Gew.%.

Der DF-Wert betrug 1,8 Δ N/g. Er konnte durch Herabsetzen des Pigmentanteils mit Polyamid 6 auf 25 Gew.% auf 0,2 δ N/g verbessert werden.

Beispiel 3

Beispiel 3 wurde analog Beispiel 2 durchgeführt. Anstelle von C.I. Pigment Blau 15:3 wurde jedoch C.I. Pigment Grün 7; C.I.Nr. 74 260 als Färbemittel verwendet.

Der DF-Wert der Pigmentpräparation (Pigmentanteil 60 Gew.%) betrug 0,9 Δ N/g. Ein weiteres Verdünnen der Präparation mit Polyamid 6 brachte keine Verbesserung des DF-Wertes.

Beispiel 4

22 Teile des in Beispiel 1 beschriebenen Polyamidharzes, 3 Teile eines Dispergierhilfsmittels auf Basis von Adipinsäure und Butan-1,3-diol mit einem Molekulargewicht von ca. 1500 und 30 Teile Pigment C.I. Rot 101; C.I.Nr. 77 491, wurden in einem auf 150°C beheizten Kneter vorgelegt und plastifiziert. Danach wurden weitere 45 Teile des Pigments portionsweise zugegeben und die Mischung bei einer Massetemperatur von 120°C dispergiert. Nach 2 Stunden war die optimale Feinverteilung erreicht.

Der Pigmentgehalt der Präparation betrug 75 Gew.%. Es wurde ein DF-Wert von 0,1 Δ N/g gemessen. Ein weiteres Verdünnen der Präparation mit Polyamid 6 erbrachte keine Verbesserung des DF-Wertes.

## Ansprüche

1. Färbemittelpräparationen, enthaltend - bezogen auf die Präparation -50 bis 75 Gew.% eines Färbemittels, ein Dispergierhilfsmittel sowie als Trägermaterial ein thermoplastisches Polyamidharz auf Basis von Kondensationsprodukten von dimerisierten ungesättigten Fettsäuren und aliphatischen Diaminen, wobei das Polyamidharz ein Molekulargewicht von 3000 bis 6000 und eine Schmelzviskosität von 0,5 bis 3,0 Pa.s (bei 165°C) aufweist.

2. Färbemittelpräparationen gemäß Anspruch 1, enthaltend als Trägermaterial ein thermoplastisches Polyamidharz, das ein Molekulargewicht von 4000 bis 5000 und eine Schmelzviskosität von 2,1 bis 2,7 Pa.s (bei 165°C) aufweist.

3. Färbemittelpräparationen gemäß Anspruch 1 oder 2, enthaltend als Färbemittel ein anorganisches oder organisches Pigment sowie ein Dispergierhilfsmittel auf Basis von Vollestern von Polyalkoholen mit Polyfunktionellen Säuren.

4. Färbemittelpräparationen gemäß Anspruch 1 oder 2, enthaltend als Färbemittel einen löslichen Farbstoff sowie als Dispergierhilfsmittel Magnesium-, Calcium-oder Zinkstearat.

5. Färbemittelpräparationen gemäß Anspruch 1, 2 oder 3, dadurch gekennzeichnet, daß das Verhältnis von Trägermaterial zu Dispergierhilfsmittel auf Basis von Vollestern von Polyalkoholen mit polyfunktionellen Säuren 4:1 bis 5:1 Gew.-Teile beträgt.

6. Färbemittelpräparationen gemäß Anspruch 1, 2 oder 4, dadurch gekennzeichnet, daß das Verhältnis von Trägermaterial zu Magnesium-, Calcium-oder Zinkstearat als Dispergierhilfsmittel 7:1 bis 9:1 Gew.-Teile beträgt.

7. Verfahren zur Herstellung von Färbemittelpräparationen gemäß Anspruch 1, dadurch gekennzeichnet, daß man bei einer Temperatur von 140 bis 160°C Trägermaterial und Dispergierhilfsmittel aufschmilzt, anschließend das Färbemittel zugibt und bei einer Temperatur von 100 bis 140°C dispergiert.

8. Verfahren gemäß Anspruch 7, dadurch gekennzeichnet, daß man einen Teil des Färbemittels zusammen mit dem Trägermaterial und dem Dispergiermittel vorlegt, aufschmilzt, nach dem Aufschmelzen das restliche Färbemittel zugibt und dann dispergiert.

8. Verwendung der Färbemittelpräparationen gemäß den Ansprüchen 1 bis 6 zur Einfärbung von thermoplastischen Kunststoffen.

10. Verwendung der Färbemittelpräparationen gemäß den Ansprüchen 1 bis 6 zur Einfärbung von Polyamidfasern.